# EUROPEAN PATENT SPECIFICATION

(11) **EP 1 900 917 B1**
(45) Date of publication and mention of the grant of the patent: **09.02.2011**
(21) Application number: 07253480.3
(22) Date of filing: 03.09.2007
(51) Int. Cl.: F01N 13/10, F01N 13/18, F01N 13/00, F01N 13/02

(54) **Motorcycle**
Motorrad
Motocyclette

(30) Priority: 14.09.2006 JP 2006249222
(43) Date of publication of application: 19.03.2008
(73) Proprietor: Yamaha Hatsudoki Kabushiki Kaisha, Iwata-shi, Shizuoka 438-8501 (JP)
(72) Inventor: Kojima, Yasukazu c/o Yamaha Hatsudoki Kabushiki Kaisha, Shizuoka-ken 438-8501 (JP); Goro, Yasushi c/o Yamaha Hatsudoki Kabushiki, Shizuoka-ken 438-8501 (JP); Harada, Keiichi c/o Yamaha Hatsudoki Kabushiki, Shizuoka-Ken 438-8501 (JP)
(74) Representative: Schoppe, Fritz

(56) References cited:
- EP-A- 0 500 105
- US-A1- 2002 050 415
- US-A1- 2006 000 205

## Description

### BACKGROUND

The present invention relates to a motorcycle including an exhaust system connected to an engine.

In an exhaust system of a motorcycle, a plurality of exhaust pipes connected to an engine are often collected together for connection to a single muffler. For example, Patent Document 1 adopts a structure in which four exhaust pipes connected to the front wall of a cylinder head are extended downward from the front wall and bent rearward so as to pass through a portion below an engine, and in the portion below the engine, the respective exhaust pipes are moved toward the side where a muffler is arranged and are collected together at a collecting portion, and the muffler is connected to the collecting portion.

When adopting a structure in which the respective exhaust pipes are collected together to the side where the muffler is arranged as in the above-mentioned exhaust system according to the related art, the exhaust pipes, the collecting portion, and the muffler are concentrated on one side in the vehicle width direction, which may impair the weight balance with respect to the vehicle width direction.

The present invention seeks to provide a motorcycle which makes it possible to achieve a good weight balance with respect to the vehicle width direction when a plurality of exhaust pipes are collected together and connected to a single muffler.

US2002/0050415 discloses an exhaust system for a multi-cylinder engine comprising a valve mechanism which is arranged to provide pulsation of the exhaust gas.

### SUMMARY

The invention is defined in the claims.

An embodiment of the invention provides a motorcycle including a body frame, an engine mounted to the body frame, and an exhaust system connected to the engine, in which: the exhaust system includes a plurality of exhaust pipes connected to a front wall of the engine and extending rearward while passing below the engine, a collecting portion where the plurality of exhaust pipes are collected together, and a muffler connected to the collecting portion; and as seen from the front of the vehicle, the plurality of exhaust pipes extend from the front wall of the engine rearward on one side in a vehicle width direction and so as to pass below the engine, and are connected to the collecting portion, and the muffler is arranged on the other side in the vehicle width direction and connected to the collecting portion.

In an embodiment of a motorcycle according to the present invention, the plurality of exhaust pipes connected to the front wall of the engine are extended from the front wall rearward on one side in the vehicle width direction and below the engine and are connected to the collecting portion, and the collecting portion is connected to the muffler arranged on the other side in the vehicle width direction. Accordingly, when seen as a whole, the respective exhaust pipes are positioned so as to be displaced to one side in the vehicle width direction. On the other hand, the muffler is positioned so as to be displaced to the other side in the vehicle width direction. The plurality of exhaust pipes and the muffler that are heavy-weight objects can be thus arranged in good balance on one side and on the other side in the vehicle width direction.

Further, when the exhaust system is seen as a whole, the plurality of exhaust pipes are positioned on one side in the vehicle width direction, and the muffler is positioned on the other side. This gives an element of flow and motion to the design of the exhaust system, thereby making it possible to achieve enhanced marketability in appearance.

### BRIEF DESCRIPTION OF THE DRAWINGS

An embodiment of the present invention will now be described, by way of example, with reference to the attached drawings.

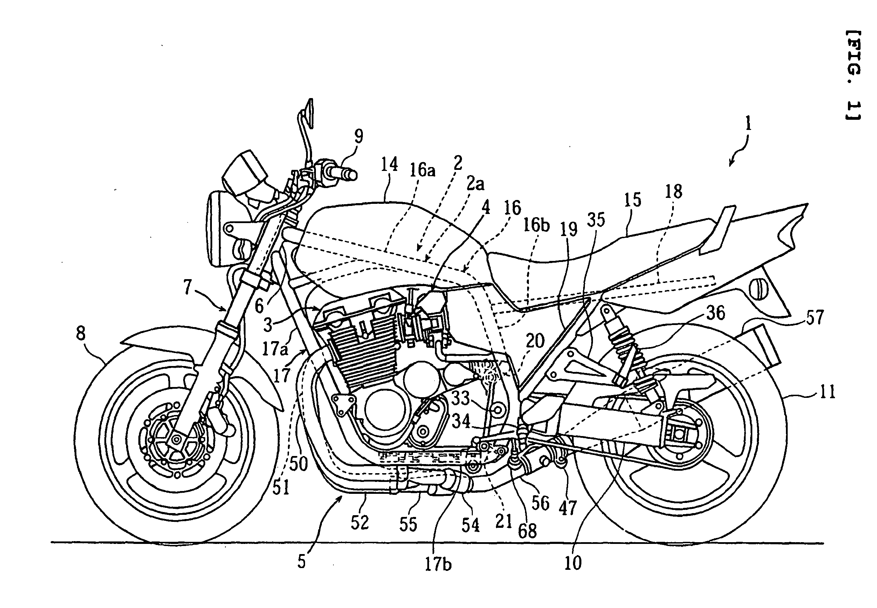

FIG. 1 is a side view of a motorcycle including an exhaust system according to an embodiment of the present invention.
FIG. 2 is a side view of the exhaust system.
FIG. 3 is a plan view of the exhaust system.
FIG. 4 is a front view of exhaust pipes of the exhaust system.
FIG. 5 is a front view of the exhaust system.

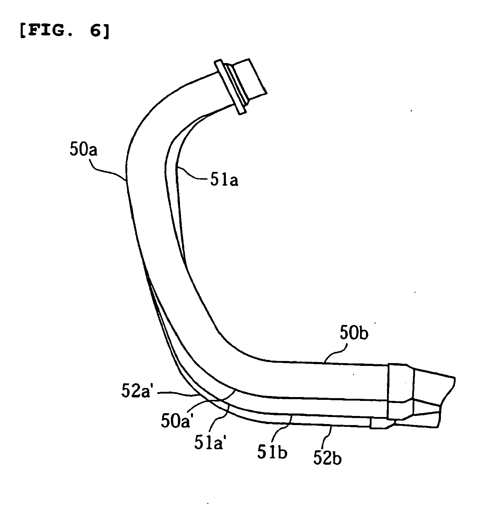

FIG. 6 is a side view of exhaust pipes of the exhaust system.
FIG. 7 is a plan view of exhaust pipes and collecting portions of the exhaust system.
FIG. 8 is a view of the exhaust pipes as seen in a cross-section taken along the vehicle width direction (cross-sectional view taken along the line VIIIa-VIIIa, VIIIb-VIIIb of FIG. 4).
FIG. 9 is a cross-sectional view of the collecting portion (cross-sectional view taking along the line IX-IX of FIG. 2).
FIG. 10 is a cross-sectional view of the collecting portion (cross-sectional view taking along the line X-X of FIG. 2).
FIG. 11 is a cross-sectional view of an oxygen concentration sensor arranged in the collecting portion (cross-sectional view taking along the line XI-XI of FIG. 7).

### DESCRIPTION OF EMBODIMENTS

FIGs . 1 to 11 are views illustrating an exhaust system of a motorcycle according to an embodiment of the present invention. Herein, the terms front and rear as used in this embodiment means the front and rear as viewed by the rider seated on the seat, and the terms left and right means the left and right as viewed from the front of the vehicle.

In the drawings, reference numeral 1 denotes a motorcycle. The motorcycle 1 includes a double-cradle type body frame 2, an engine 3 mounted inside the cradle of the body frame 2, and an intake system 4 and an exhaust system 5 that are connected to the engine 3.

A front fork 7 is supported by a head pipe 6 arranged at the front end of the body frame 2 so as to be steerable to the left and right. A front wheel 8 and a steering handlebar 9 are respectively arranged at the lower and upper end portions of the front fork 7.

The front end portion of a rear arm 10 is supported by a rear portion of the body frame 2 so as to be vertically swingable. A rear wheel 11 is arranged at the rear end portion of the rear arm 10. A fuel tank 14 is arranged above the engine 3 in the body frame 2, and a seat 15 is arranged on the rear side of the fuel tank 14.

The body frame 2 includes left and right frame members 2a, 2a, and upper and lower cross members 20, 21 made of steel pipes that connect the rear end portions of the left and right frame members 2a to each other.

The left and right frame members 2a are substantially laterally symmetrical. The left and right frame members 2a include left and right upper tubes 16, 16, which have tank rail portions 16a, 16a extending slightly downward to the rear from an upper portion of the head pipe 6 and rear-arm supporting portions 16b, 16b extending rearwardly downward from the rear ends of the tank rail portions 16a, and left and right down tubes 17, 17, which have inclined portions 17a, 17a extending obliquely downward to the rear from a lower portion of the head pipe 6 and horizontal portions 17b, 17b extending substantially horizontally to the rear from the lower ends of the inclined portions 17a.

Further, the left and right frame members 2a, 2a include left and right seat rails 18, 18 extending obliquely upward to the rear from the upper end portions of the left and right rear-arm supporting portions 16b, and left and right seat stays 19, 19 that connect between longitudinally midway portions of the seat rails 18 and lower portions of the rear-arm supporting portions 16b.

The upper cross member 20 is arranged in each of the vertically halfway portions of the left and right rear-arm supporting portions 16b, 16b.

The lower cross member 21 is arranged at the connecting portion between the lower end portion of each of the left and right rear-arm supporting portions 16b, and the rear end portion of each of the left and right horizontal portions 17b.

The engine 3 is a water-cooled four-cycle, parallel four-cylinder engine. The engine 3 is mounted with the cylinder axis tilted forward, and is suspended and supported by the left and right upper tubes 16 and the left and right down tubes 17.

The engine 3 has a structure in which a cylinder block 27, a cylinder head 28, and a head cover 29 are stacked in order on the upper mating surface of a crankcase 26 in which a crankshaft 25 is accommodated, a transmission case 26a in which a transmission mechanism (not shown) is accommodated is integrally formed and connected to a rear portion of the crankcase 26, and an oil sump 30 is connected to the bottom portion of the crankcase 26.

Generally triangular rear-arm brackets 32, 32 are connected on the front side of the left and right rear-arm supporting portions 16b so as to be positioned inside the cradle. The rear arm 10 is supported by the left and right rear-arm supporting brackets 32 via a pivot shaft 33.

On the rear side of the lower end portions of the left and right rear-arm supporting portions 16b, footrests 34, 34 on which the rider places his/her feet are arranged so as to project outward in the vehicle width direction.

The front end portions of generally triangular foot brackets 35, 35 that extend rearward are connected to the left and right seat stays 19. A tandem footrest 36 on which the passenger in the rear portion places his/her feet is arranged at the rear end portion of each of the foot brackets 35.

A downwardly C-shaped stand bracket 37 that extends downward is connected to the lower cross member 21. A main stand 38 is arranged in the stand bracket 37 so as to be pivotable between an upright position in which the main stand 38 holds the vehicle body, and a retracted position in which the main stand 38 is substantially in parallel to the horizontal portions 17b of the down tubes 17.

The main stand 38 includes a stand body 38b having left and right leg portions 38a, 38a, and a footstep arm portion 38c formed so as to extend to the outside of the vehicle from the leg portion 38a on the right side.

The intake system 4 includes four intake pipes 40 connected to a rear wall 28a of the cylinder head 28 for respective cylinders, a throttle body 41 connected to each intake pipe 40, and a common air cleaner connected to each throttle body 41.

A fuel injection valve 45 for injecting fuel to supply into an intake port (not shown) formed in the cylinder head 28 is fitted to the downstream end portion of each of the intake pipes 40.

The exhaust system 5 includes first to fourth exhaust pipes 50, 51, 52, 53, which are connected to exhaust ports formed in a front wall 28b of the cylinder head 28 for respective cylinders and extend downward from the front wall 28b and then extends rearward while passing below the engine 3, a right-side collecting portion (first collecting portion) where the first and second exhaust pipes (first exhaust pipe group) 50, 51 are collected together, a left-side collecting portion (second collecting portion) where the third and fourth exhaust pipes (second exhaust pipe group) 52, 53 are collected together, a main collecting portion (third collecting portion) 56 where the left-side and right-side collecting portions 54, 55 are collected together, and a single muffler 57 connected to a rearwardly extended portion 56b of the main collecting portion 56.

The first to fourth exhaust pipes 50 to 53, the right-side and left-side collecting portions 54, 55, and the main collecting portion 56 are joined integrally by welding. The muffler 57 is detachably connected to the rearwardly extended portion 56b of the main collecting portion 56 by a band member 47.

Upstream-side catalysts (first catalyst) 48, 48 for performing purification of an exhaust gas are arranged inside the right-side and left-side collecting portions 54, 55. A downstream-side catalyst (second catalyst) 49 for performing purification of an exhaust gas is arranged inside the muffler 57.

The muffler 57 is arranged so as to be oriented obliquely upward on the left side (other side) in the vehicle width direction of the rear wheel 11. As seen in plan view, the muffler 57 has a cylindrical rear-side muffler portion 57b that extends substantially in parallel to the vehicle body centerline C, and a substantially conical front-side muffler portion 57c that extends from the front end of the rear-side muffler portion 57b so as to be bent toward the vehicle body centerline C.

Further, as seen from the right side of the vehicle, most part of the muffler 57 is located within the projection plane of the rear wheel 11. The catalyst 49 is arranged at the boundary between the front-side and rear-side muffler portions 57c, 57b.

A mounting strip 57a is formed in the upper wall of the rear-side muffler portion 57b of the muffler 57 so as to project upward. The mounting strip 57a is mounted and fixed on the rear side of the tandem footrest 36 of the left foot bracket 35.

A flat mounting bracket 58 is connected to the right-side and left-side collecting portions 54, 55 so as to bridge the upper ends of the respective collecting portions 54, 55. A mounting hole 58a is formed in the mounting bracket 58 so as to be positioned between the two collecting portions 55, 54.

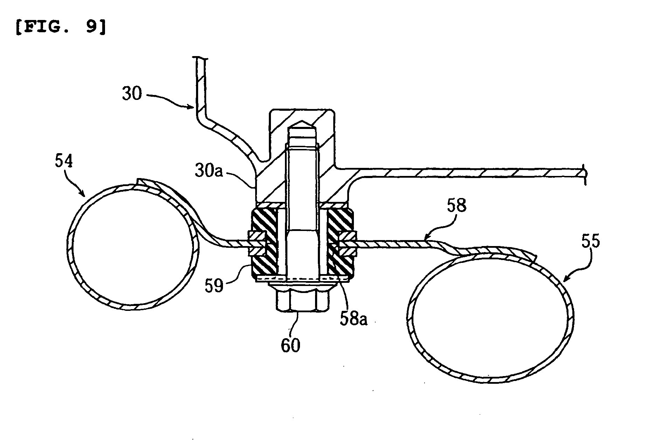

As shown in FIG. 9 that is a cross-sectional view of the right-side and left-side collecting portions 54, 55 as seen from the rear of the vehicle, a grommet 59 is fitted onto the mounting hole 58a. Further, a boss portion 30a is formed at the bottom portion of the oil sump 30. The mounting bracket 58 is mounted to the boss portion 30a through the intermediation of the grommet 59 by means of a bolt 60 that is inserted from below. The right-side and left-side collecting portions 54, 55 are thus elastically supported on the oil sump 30.

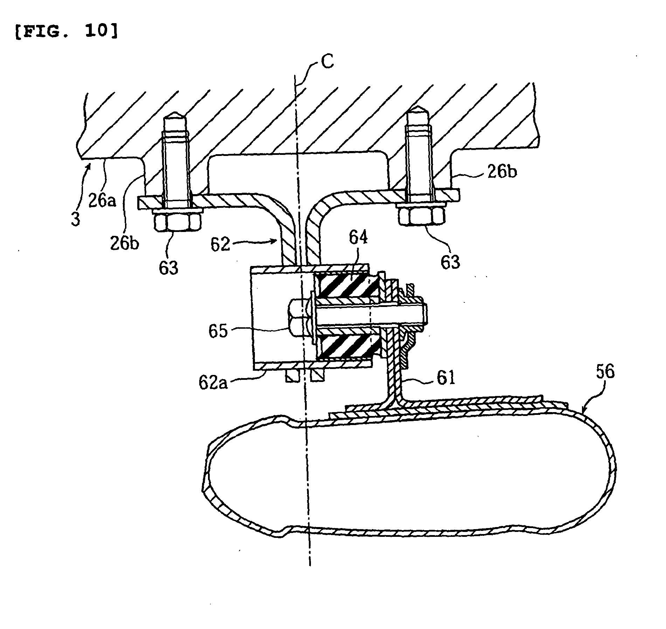

As shown in FIG. 10 that is a cross-sectional view of the main collecting portion 56 as seen from the rear of the vehicle, a mounting bracket 61 is connected to the upstream-side end portion of the main collecting portion 56 so as to project upward. Further, a pair of left and right boss portions 26b, 26b are formed at the bottom portion of the transmission case 26a of the crankcase 26. A substantially T-shaped stay 62 is fixed to the respective boss portions 26b by means of bolts 63, 63 that are threadedly inserted from below. A cylinder member 62a is arranged in and fixed to the stay 62 with its axis oriented in the vehicle width direction. A grommet 64 is inserted and fixed inside the cylinder member 62a.

The mounting bracket 61 is mounted to the stay 62 via the grommet 64 by means of a bolt 65 inserted in the vehicle width direction. The main collecting portion 56 is thus elastically supported on the crankcase 26.

The right-side collecting portion 54 has a bifurcated connecting portion 54a to which the first and second exhaust pipes 50, 51 are connected, a small-diameter portion 54b continuous to the connecting portion 54a and formed so as to have a smaller passage area, and a large-diameter portion 54c continuous to the small-diameter portion 54b and formed so as to have a larger passage area. The catalyst 48 is arranged in the large-diameter portion 54c.

Like the right-side collecting portion 54, the left-side collecting portion 55 has a bifurcated connecting portion 55a to which the third and fourth exhaust pipes 52, 53 are connected, a small-diameter portion 55b, and a large-diameter portion 55c. The catalyst 48 is arranged in the large-diameter portion 55c.

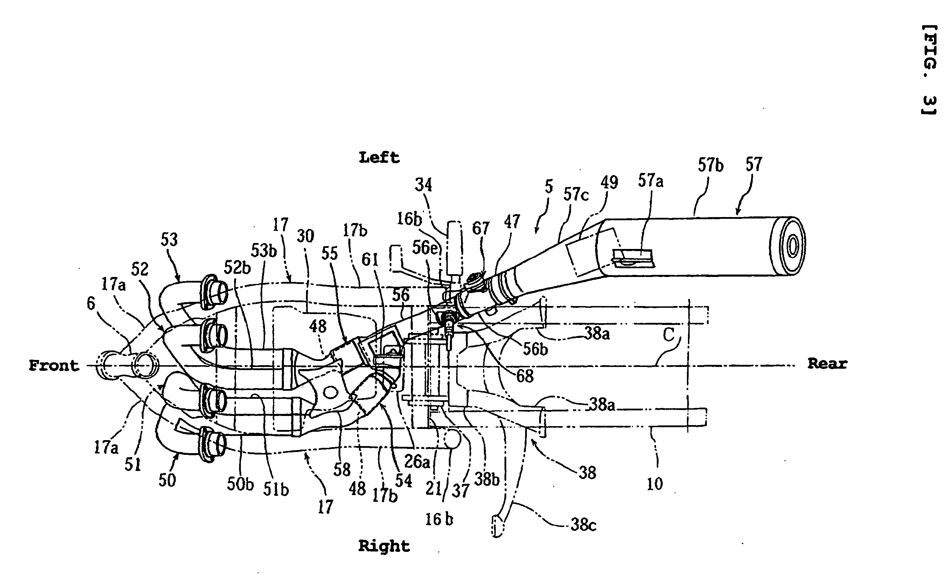

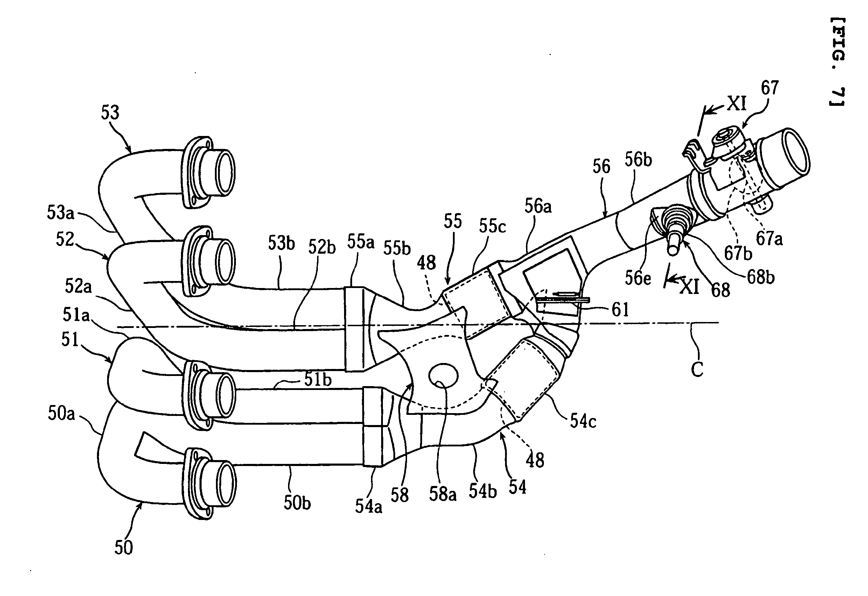

As shown in FIGs. 3, 7, as seen in plan view, the right-side and left-side collecting portions 54, 55 are displaced to the right side in the vehicle width direction with respect to a vehicle body centerline C. That is, with the left-side and right-side collecting portions 54, 55 seen as a single mass, its center is displaced to the right side in the vehicle width direction. It should be noted that the centerline of the engine 3 in the vehicle width direction coincides with the vehicle body centerline C.

The connecting portion 54a of the right-side collecting portion 54 is displaced to the right side in the vehicle width direction with respect to the vehicle body centerline C and arranged in proximity to the right down tube 17. The small-diameter portion 54b is formed so as to be bent in a L shape to the left side in the vehicle width direction from the connecting portion 54a. The downstream-side end portion of the large-diameter portion 54c is in proximity to the vehicle body centerline C.

The connecting portion 55a of the left-side collecting portion 55 is arranged such that its center substantially coincides with the vehicle body centerline C. The small-diameter portion 55b is formed so as to be bent in a L shape to the left side in the vehicle width direction on the vehicle body centerline C. The large-diameter portion 55c is arranged with its inner end portion overlapping the vehicle body centerline C. In other words, the large-diameter portions 54c, 55c of the right-side and left-side collecting portions 54, 55 are displaced to the left side in the vehicle width direction with respect to the connecting portions 54a, 55a.

As seen in plan view, the main collecting portion 56 is arranged so as to be positioned on the left side in the vehicle width direction with respect to the vehicle body centerline C. The main collecting portion 56 has a bifurcated connecting portion 56a to which the right-side and left-side collecting portions 54, 55 are connected, and the rearwardly extended portion (inclined portion) 56b. The rearwardly extended portion 56b extends in a substantially linear fashion obliquely outward to the left from the connecting portion 56a and, as seen from the lateral side, extends obliquely upward.

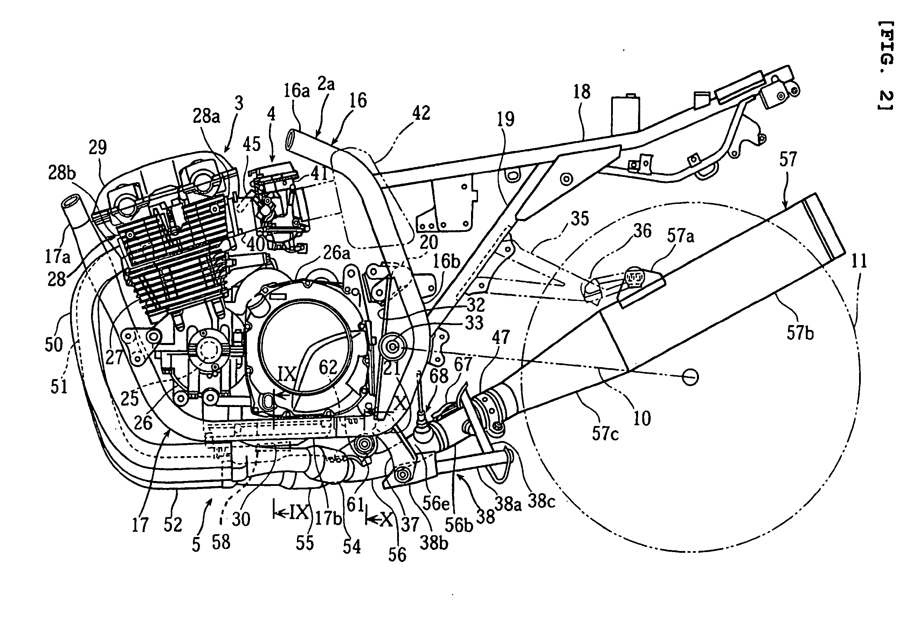

As shown in FIGs. 2, 3, the rearwardly extended portion 56b extends rearward so as to pass through a space between the left-side footrest 34 and the main stand 38, from a position in rear of the engine 3 and below the lower cross member 21. The muffler 57 is connected to the rear end portion of the rearwardly extended portion 56b.

The first to fourth exhaust pipes 50 to 53 has front-side exhaust pipe portions 50a to 53a that extend obliquely downward from first to fourth exhaust ports in the front wall 28b of the cylinder head 28 toward the right side (one side) in the vehicle width direction, and rear-side exhaust pipe portions 50b to 53b that extend rearward from the lower end portions of the front-side exhaust pipe portions 50a to 53a while being bent so as to pass below the oil sump 30 of the engine 3. The detailed structure of the first to fourth exhaust pipes 50 to 53 is as described below.

The right down tube 17 is positioned between the first and second exhaust pipes 50, 51, and the left down tube 17 is positioned between the third and fourth exhaust pipes 52, 53. The vehicle body centerline C is positioned at substantially the middle in the vehicle width direction between the second and third exhaust pipes 51, 52.

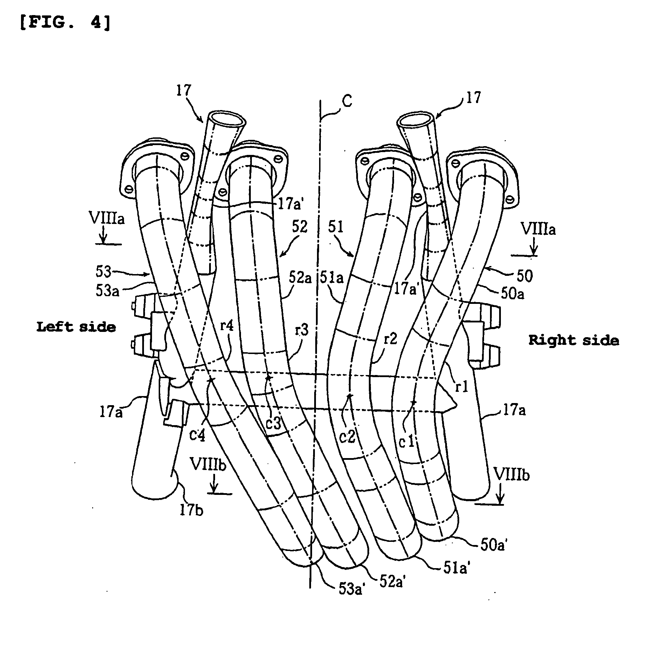

As seen from the lateral side of the vehicle, the first to fourth front-side exhaust pipe portions 50a to 53a are positioned forward of the inclined portions 17a of the left and right down tubes 17, and crossing portions 17a' of the left and right inclined portions 17a with the front-side exhaust pipe portions 50a to 53a have an elliptic cross section crushed in the vehicle width direction (see FIG. 4). This prevents interference from occurring as the inclined portions 17a, 17a of the down tubes 17 pass between the respective front-side exhaust pipe portions 50a, 51a and 52a, 53a.

The first and second rear-side exhaust pipe portions 50b, 51b extend linearly to the rear while in contact with each other from the lower end portions of the front-side exhaust pipe portions 50a, 51a and are connected to the right-side collecting portion 54. Likewise, the third and fourth rear-side exhaust pipe portions 52b, 53b are connected while in contact with each other to the left-side collecting portion 55.

As seen from the front, the first and second front-side exhaust pipe portions 50a, 51a first extend obliquely downward to the inner side toward the vehicle body centerline C from the connecting portions with the exhaust ports, that is, from the upstream end portions, and then extend obliquely downward while being bent to the outer side at bending R portions r1, r2. The first and second front-side exhaust pipe portions 50a, 51a are thus generally shaped in a L shape as a whole.

The third and fourth front-side exhaust pipe portions 52a, 53a extend obliquely downward from their upstream end portions toward the vehicle body centerline C while being gently curved at bending R portions r3, r4. The lower end portion of the third front-side exhaust pipe portion 52a extends to the right side in the vehicle width direction beyond the vehicle body centerline C, and the lower end portion of the fourth front-side exhaust pipe portion 53a extends so as to overlap the vehicle body centerline C.

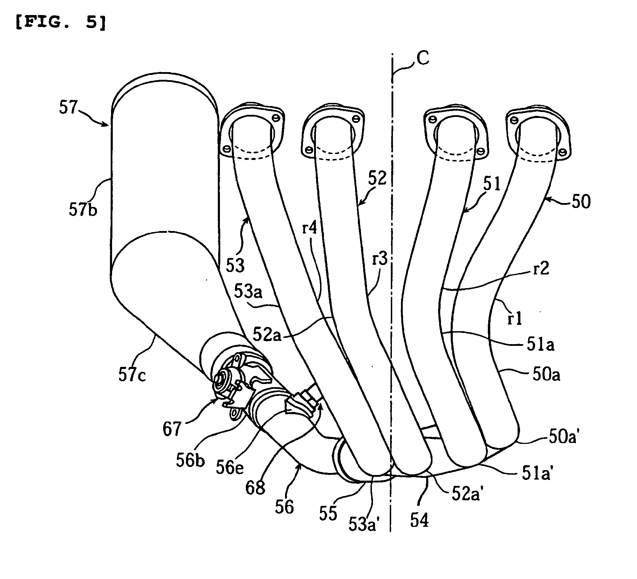

As seen from the front of the vehicle, each of the bending R portions r1, r2, r3, r4 has a center of curvature positioned on one side (right side) in the vehicle width direction with respect to the center of each of the front-side exhaust pipes, and is thus bent so as to be convex facing toward the other side in the vehicle width direction. Further, the radii of the bending R's of the bending R portions r1, r2 of the first and second front-side exhaust pipe portions 50a, 51a are set to values smaller than the radii of the bending R' s of the bending R portions r3, r4 of the third and fourth front-side exhaust pipe portions 52a, 53a (see Figs. 4, 5).

Furthermore, top portions c3, c4 of the bending R's of the bending R portions r3, r4 of the third and fourth front-side exhaust pipe portions 52a, 53a are positioned higher than top portions c1, c2 of the bending R' s of the bending R portions r1, r2 of the first and second front-side exhaust pipe portions 50a, 51a.

As seen in a cross-section taken transversely of the vehicle width direction, the upstream-side portion (line VIIIa-VIIIa in FIG. 4) and downstream-side portion (line VIIIb-VIIIb in FIG. 4) of each of the first to fourth front-side exhaust pipe portions 50a to 53a with respect to the bending R portions r1 to r4 have the following structure.

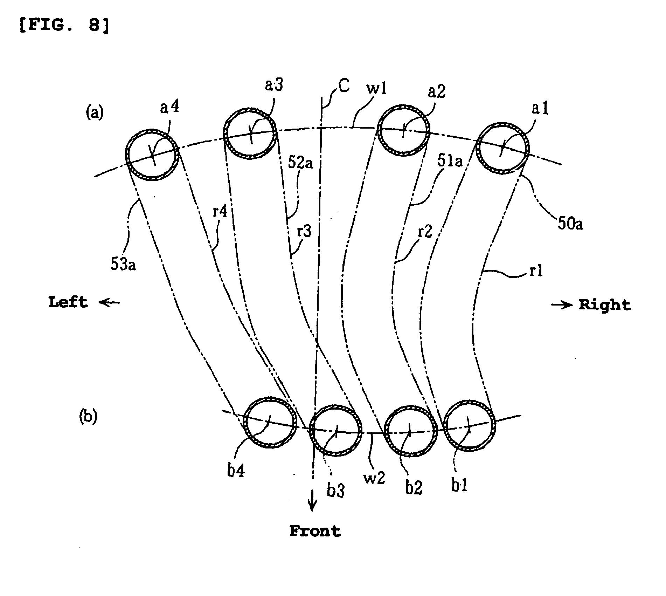

As shown in FIG. 8, the centers a1 to a4 of the first to fourth front-side exhaust pipe portions 50a to 53a in the upstream-side portion are arranged so as to diverge toward the front of the vehicle as a whole. In other words, a curve w1 connecting the centers a1 to a4 is convex facing toward the rear of the vehicle. Further, the centers b1 to b4 of the first to fourth front-side exhaust pipe portions 50a to 53a in the downstream-side portion are arranged so as to converge toward the front of the vehicle as a whole. In other words, a curve w2 connecting the centers b1 to b4 is convex facing toward the front of the vehicle. Stated in still other words, in the upstream-side portion from the bending R portion, the second and third front-side exhaust pipe portions 51a, 52a are positioned on the rear side with respect to the first and fourth front-side exhaust pipe portions 50a, 53a, and in the downstream-side portion, the second and third front-side exhaust pipe portions 51a, 52a are positioned on the front side with respect to the first and fourth front-side exhaust pipe portions 50a, 53a.

As seen from the front of the vehicle, rearwardly bent portions 50a', 51a' at the lower ends of the first and second front-side exhaust pipe portions 50a, 51a are formed on the outer side in the vehicle width direction with respect to, and positioned higher than, rearwardly bent portions 52a', 53a' at the lower ends of the third and fourth front-side exhaust pipe portions 52a, 53a. Further, the rearwardly bent portion 50a' of the first front-side exhaust pipe portion 50a is formed so as to be positioned higher than the rearwardly bent portion 51a' of the second front-side exhaust pipe portion 51a (see FIG. 4).

Accordingly, as seen from the lateral side of the vehicle, the first and second rear-side exhaust pipe portions 50b, 51b are arranged at positions higher than the third and fourth rear-side exhaust pipe portions 52b, 53b, and further the first rear-side exhaust pipe portion 50b is arranged at a position higher than the second rear-side exhaust pipe portion 51b. The bank angle becomes large as a result.

The exhaust system 5 includes an exhaust valve 67. The exhaust valve 67 is arranged at the downstream-side end portion of the rearwardly extended portion 56b of the main collecting portion 56 and on the upstream side of the downstream-side catalyst 49, and is formed by arranging a valve plate 67b, which causes the passage area inside the main collecting portion 56 to change, on a valve shaft 67a that radially extends through the main collecting portion 56 (see FIG. 7). The valve shaft 67a is arranged in a titled manner so that its position is higher on the outer side in the vehicle width direction. A drive cable (not shown) is connected to the valve shaft 67a.

The exhaust system 5 has an oxygen concentration sensor 68 that detects the concentration of oxygen in an exhaust gas. An air fuel ratio is found on the basis of the oxygen concentration detected by the oxygen concentration sensor 68, and the amount of fuel supply from the fuel injection valve 45 is controlled so that this air-fuel ratio becomes a target air-fuel ratio.

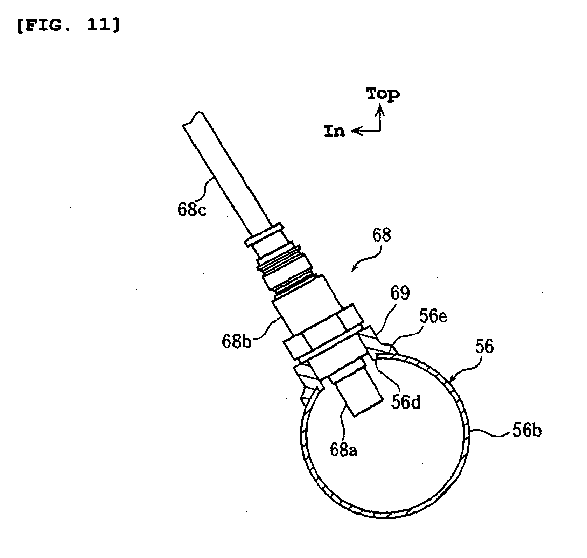

The oxygen concentration sensor 68 has a detecting portion 68a inserted with its distal end portion positioned inside the rearwardly extended portion 56b of the main collecting portion 56, a sensor body 68b connected to the detecting portion 68a, and an external connection cable 68c for leading a detection signal to the outside from the detecting portion 68a (see FIG. 11).

A sensor fitting hole 56d is formed in the rearwardly extended portion 56b of the main collecting portion 56. A nut member 69 is connected to the fitting hole 56d in an airtight manner. The oxygen concentration sensor 68 is detachably mounted to the main collecting portion 56 by fastening and fixing the sensor body 68b to the nut member 69 in an airtight manner.

The oxygen concentration sensor 68 is arranged in an upper wall portion 56e of the rearwardly extended portion 56b of the main collecting portion 56, and on the upstream side in front of the exhaust valve 67. The oxygen concentration sensor 68 thus detects the concentration of oxygen in the exhaust gas that has passed through each of the left and right upstream-side catalysts 48, 48.

The oxygen concentration sensor 68 is arranged in a tilted manner so that the upper portion of the sensor body 68b is positioned on the inner side in the vehicle width direction and upward. Further, as seen in the longitudinal direction of the vehicle, the oxygen concentration sensor 68 is arranged so as to cross the exhaust valve 67.

As seen from the lateral side of the vehicle, the oxygen concentration sensor 68 is arranged between the engine 3 and the rear wheel 11, and so as to be positioned substantially at the same height as the lower cross member 21.

Further, the oxygen concentration sensor 68 is arranged so as to be positioned above the main stand 38 that is in the retracted position, positioned below the rear arm 10 and on its outer side in the vehicle width direction, and positioned on the inner side in the vehicle width direction of the footrest 34 on the left side.

Accordingly, as seen from the lateral side, the oxygen concentration sensor 68 is surrounded by the lower cross member 21, the stand bracket 37, the stand body 38b, the footstep arm portion 38c, the rear-arm supporting portion 16b, and the rear arm 10.

According to this embodiment, the four exhaust pipes, the first to fourth exhaust pipes 50 to 53 connected to the exhaust ports of the respective cylinders in the front wall 28b of the cylinder head 28 are extended from the rear wall 28b obliquely downward to the right side in the vehicle width direction and are connected to the right-side and left-side collecting portions 54, 55 that are displaced to this right side, and the right-side and left-side collecting portions 54, 55 are connected via the main collecting portion 56 to the single muffler 57 that is displaced to the left side in the vehicle width direction. Therefore, when the exhaust system is seen as a whole, the first to fourth exhaust pipes 50 to 53 and the left-side and right-side collecting portions 54, 55 are positioned on the right side in the vehicle width direction, and the muffler 57 is positioned on the left side in the vehicle width direction, with respect to the vehicle body centerline C. The exhaust pipes and the muffler, which are heavy-weight objects in the exhaust system 5, can be thus laid out with good balance on the left and right, thereby achieving good weight balance with respect to the vehicle width direction.

In this embodiment, the first to fourth exhaust pipes 50 to 53 are tilted obliquely downward toward the right side from the front wall 28b. Therefore, the exhaust pipes are enlarged in length as compared with a case where, for example, the exhaust pipes are extended vertically downward, thereby making it possible to secure a required exhaust pipe length and an improvement in output performance.

In this embodiment, when seen as a whole, the first to four exhaust pipes 50 to 53 are first displaced toward the right side and connected to the right-side and left-side collecting portions 54, 55 arranged so as to be displaced to this right side, and are then connected via the main collecting portion 56 to the muffler 57 arranged so as to be displaced to the opposite side (left side). This gives an element of flow and motion to the design of the exhaust system when seen as a whole, thereby making it possible to achieve enhanced marketability in appearance. It should be noted that when it is said that the left and right collecting portions 54, 55 are arranged so as to be displaced to one side in the vehicle width direction, this means that when the collecting portions 54, 55 are seen as a single mass, its center is displaced to one side in the vehicle width direction.

In this embodiment, since the radii of the bending R's of the bending R portions r1, r2 in the vehicle width direction of the first and second front-side exhaust pipe portions 50a, 51a are set smaller than the radii of the bending R's of the bending R portions r3, r4 in the vehicle width direction of the third and fourth front-side exhaust pipe portions 52a, 53a, the exhaust pipe lengths of the respective exhaust pipes 50 to 53 can be made substantially same. That is, since the first and second exhaust pipes 50, 51 have a generally curved shape, and the third and fourth exhaust pipes 52, 53 have a generally linear shape, it is possible to reduce the difference in exhaust pipe length between the first and second exhaust pipes 50, 51 and the third and fourth exhaust pipes 52, 53.

Further, since the radius of the bending R differs between the bending R portions r1, r2 of the first and second exhaust pipes 50, 51 and the bending R portions r3, r4 of the third and fourth exhaust pipes 52, 53, the feel of a smooth curve with little or no linear section, that is, a hand-bent or hand-made feel can be given. Enhanced marketability in appearance can be achieved also in this respect.

In this embodiment, the curve w1 in the upstream-side portions of the first to fourth exhaust pipes 50 to 53 with respect to the bending R portions r1 to r4 is formed in a convex shape facing toward the rear of the vehicle, and the curve w2 in the downstream-side portions is formed in a convex shape facing toward the front of the vehicle. The above-mentioned hand-bent feel can be given also in this respect.

In this embodiment, since the rearwardly bent portions 50a' , 51a' of the first and second exhaust pipes 50, 51 are positioned higher than the rearwardly bent portions 52a' , 53a' of the third and fourth exhaust pipes 52, 53, it is possible to secure the bank angle when arranging the respective exhaust pipes 50 to 53 so as to be displaced to the right side in the vehicle width direction, thereby achieving increased maneuverability.

In this embodiment, the right-side and left-side collecting portions 54, 55 are supported by the oil sump 30 via the mounting bracket 58, thereby achieving increased reliability in terms of the supporting strength for the right-side and left-side collecting portions 54, 55 that are heavy-weight objects.

In this embodiment, the front end portion of the main collecting portion 56 is supported by the transmission case 26a of the crankcase 26 via the mounting bracket 61, thereby achieving increased reliability in terms of the supporting strength for the main collecting portion 56 that is a heavy-weight object.

Further, the portions on the front side and rear side of the catalysts 48 arranged in the left-side and right-side collecting portions 54, 55 are supported by the engine 3 via the mounting brackets 58, 61, respectively, thereby achieving a further increase in reliability in terms of supporting strength.

While in the above embodiment the description is directed to the case where the number of exhaust pipes is four, the exhaust system according to the present invention is also applicable to a case where the number of exhaust pipes is three or five. In this case as well, the same effect as that of the above embodiment can be obtained by arranging the exhaust pipes so as to be displaced to one side in the vehicle width direction.

### DESCRIPTION OF REFERENCE NUMERALS AND SYMBOLS

12: motorcycle
2: body frame
3: engine
5: exhuast system
28: cylinder head
28b: front wall
26: crankcase
30: oil sump
48, 49: upstream-side/downstream-side catalyst (first/second catalyst)
50, 51: first/second exhaust pipe (first exhaust pipe group)
52, 53: second/third exhaust pipe (second exhaust pipe group)
54, 55: right-side/left-side collecting portion (first/second collecting portion)
56: main collecting portion (third collecting portion)
57: muffler
a1 to a4: center of cross-section taken along vehicle width direction on upstream side
b1 to b4: center of cross-section taken along vehicle width direction on upstream side
C: vehicle body centerline
c1 to c4: top portion of bending R portion
r1 to r4: bending R portion
r1' to r4': radius of bending R of bending R portion
w1, w2: curve

## Claims

1. A motorcycle (1) comprising a body frame (2), an engine (3) mounted to the body frame, and an exhaust system connected to the engine,
wherein:
the exhaust system includes a plurality of exhaust pipes (50 , 51, 52, 53) connected to a front wall of the engine (3) and extending rearward while passing below the engine, a collecting portion or portions (54, 55) where the plurality of exhaust pipes are collected together, and a muffler (57) connected to the collecting portion;
as seen from the front of the vehicle, the plurality of exhaust pipes (50, 51, 52, 53) extend from the front wall of the engine rearward towards a first side of a centre line (c) extending along the length of the motorcycle (11) in a vehicle width direction of the vehicle and so as to pass below the engine, and are connected to the collecting portion (s) (54, 54), and the muffler (57) is arranged on a second opposing side of a centre line extending along the length of the motorcycle (1) in the width direction of the vehicle and connected to the collecting portion(s), **characterized in that** the motorcycle has
the centre of mass of the collecting portion(s) (54, 55) when considered as a single mass is located on said first side of said motorcycle (1) with respect to said centre line (c) and the centre of mass of said muffler (57) is located on said second opposing side of the motorcycle with respect to said centre line (c).

2. The motorcycle according to Claim 1, wherein the plurality of exhaust pipes extend obliquely downward toward one side in the vehicle width direction.

3. The motorcycle according to Claim 1 or Claim 2, wherein as seen from the front of the vehicle, the exhaust pipes each have a bending R portion having a convex shape facing toward the other side in the vehicle width direction.

4. The motorcycle according to Claim 3, wherein of the plurality of exhaust pipes, a top portion of the bending R portion of an exhaust pipe connected to the other side portion of the front wall of the engine is positioned higher than a top portion of the bending R portion of an exhaust pipe connected to one side portion.

5. The motorcycle according to Claim 3 or Claim 4, wherein centers of cross-sections taken along the vehicle width direction of the plurality of exhaust pipes on an upstream side of the bending R portion are configured to diverge toward the front of the vehicle.

6. The motorcycle according to Claim 5, wherein a curve connecting the centers of the cross-sections taken along the vehicle width direction of the plurality of exhaust pipes on the upstream side of the bending R portion is convex facing toward the rear of the vehicle.

7. The motorcycle according to Claim 3, wherein centers of cross-sections taken along the vehicle width direction of the plurality of exhaust pipes on a downstream side of the bending R portion are configured to converge toward the front of the vehicle.

8. The motorcycle according to Claim 7, wherein a curve connecting the centers of the cross-sections taken along the vehicle width direction of the plurality of exhaust pipes on the downstream side of the bending R portion forms a convex shape facing toward the front of the vehicle.

9. The motorcycle according to Claim 1, wherein the plurality of exhaust pipes (50, 51, 52, 53) each have a rearwardly bent portion that is bent rearward, and as seen from the front of the vehicle (1), of the plurality of exhaust pipes, the rearwardly bent portion of an exhaust pipe connected to one side in the vehicle width direction of the front wall of the engine is positioned higher than the rearwardly bent portion of an exhaust pipe connected to the other side in the vehicle width direction of the front wall of the engine (3).

10. The motorcycle according to Claim 1, wherein the collecting portion is supported on a bottom portion of the engine.

11. The motorcycle according to Claim 10, further comprising an oil sump (30) arranged at the bottom portion of the engine, wherein the collecting portion is supported on the oil sump.

12. The motorcycle according to Claim 1, wherein a first catalyst is arranged in the collecting portion.

13. The motorcycle according to Claim 1, wherein a second catalyst is arranged in the muffler.

14. The motorcycle according to Claim 1,
wherein:
the plurality of exhaust pipes include a first exhaust pipe group connected to one side portion of the front wall of the engine, and a second exhaust pipe group connected to the other side portion;
the collecting portion includes a first collecting portion for collecting the first exhaust pipe group together, a second collecting portion for collecting the second exhaust pipe group together, and a third main collecting portion for collecting the first collecting portion and the second collecting portion together; and
the muffler is connected to the third main collecting portion.

## Patentansprüche

1. Ein Motorrad (1), das einen Karosserierahmen (2), einen Motor (3), der an dem Karosserierahmen befestigt ist und ein Auspuffsystem aufweist, das mit dem Motor verbunden ist, wobei:
das Auspuffsystem eine Mehrzahl von Auspuffrohren (50, 51, 52, 53), die mit einer Vorderwand des Motors (3) verbunden sind und sich rückwärts erstrecken während sie unter dem Motor verlaufen, einen Sammelabschnitt oder mehrere Abschnitte (54, 55), wo die Mehrzahl der Auspuffrohre gesammelt sind, und einen Schalldämpfer (57), der mit dem Sammelabschnitt verbunden ist umfasst;
betrachtet von der Vorderseite des Fahrzeugs erstreckt sich die Mehrzahl der Auspuffrohre (50, 51, 52, 53) von der Vorderwand des Motors rückwärts hin zu einer ersten Seite einer Mittellinie (c), die sich entlang der Länge des Motorrads (11) in einer Fahrzeugbreitenrichtung des Fahrzeugs erstreckt, um unter dem Motor zu verlaufen, und sind mit dem (den) Sammelabschnitt(en) (54, 54) verbunden, und der Schalldämpfer (57) ist auf einer zweiten gegenüberliegenden Seite einer Mittellinie angeordnet, die sich entlang der Länge des Motorrads (1) in der Breitenrichtung des Fahrzeugs erstreckt und ist mit dem einen oder den mehreren Sammelabschnitten verbunden, **dadurch gekennzeichnet, dass**
das Motorrad den Masseschwerpunkt des (der) Sammelabschnitts(e) (54, 55), wenn es als einzelne Masse betrachtet wird, auf der ersten Seite des Motorrads (1) im Hinblick auf die Mittellinie (c) aufweist und der Masseschwerpunkt des Schalldämpfers (57) auf der zweiten, gegenüberliegenden Seite des Motors im Hinblick auf die Mittellinie (c) angeordnet ist.

2. Das Motorrad gemäß Anspruch 1, bei dem sich die Mehrzahl der Auspuffrohre schräg abwärts hin zu einer Seite in der Fahrzeugbreitenrichtung erstreckt.

3. Das Motorrad gemäß Anspruch 1 oder Anspruch 2, bei dem, betrachtet von der Vorderseite des Fahrzeugs, die Auspuffrohre jeweils einen Biegungs-R-Abschnitt aufweisen, mit einer konvexen Form, der hin zu der anderen Seite in der Fahrzeugbreitenrichtung gewandt ist.

4. Das Motorrad gemäß Anspruch 3, bei dem von der Mehrzahl der Auspuffrohre ein oberer Abschnitt des Biegungs-R-Abschnitts eines Auspuffrohres, der mit dem anderen Seitenabschnitt der Vorderwand des Motors verbunden ist, höher positioniert ist als ein oberer Abschnitt des Biegungs-R-Abschnitts eines Auspuffrohrs, der mit einem Seitenabschnitt verbunden ist.

5. Das Motorrad gemäß Anspruch 3 oder Anspruch 4, bei dem Mitten der Querschnitte genommen entlang der Fahrzeugbreitenrichtung der Mehrzahl der Auspuffrohre auf einer Seite in Verarbeitungsrichtung aufwärts von dem Biegungs-R-Abschnitt konfiguriert sind, um hin zu der Vorderseite des Fahrzeugs zu divergieren.

6. Das Motorrad gemäß Anspruch 5, bei dem eine Kurve, die die Mitten der Querschnitte verbindet, genommen entlang der Fahrzeugbreitenrichtung der Mehrzahl der Auspuffrohre auf der Seite in Verarbeitungsrichtung aufwärts von dem Biegungs-R-Abschnitt, konvex ist und hin zu der Rückseite des Fahrzeugs gewandt ist.

7. Das Motorrad gemäß Anspruch 3, bei dem Mitten der Querschnitte genommen entlang der Fahrzeugbreitenrichtung der Mehrzahl der Auspuffrohre auf einer Seite in Verarbeitungsrichtung abwärts von dem Biegungs-R-Abschnitt konfiguriert sind, um hin zu der Vorderseite des Fahrzeugs zu konvergieren.

8. Das Motorrad gemäß Anspruch 7, bei dem eine Kurve, die die Mitten der Querschnitte verbindet, genommen entlang der Fahrzeugbreitenrichtung der Mehrzahl der Auspuffrohre auf der Seite in Verarbeitungsrichtung abwärts von dem Biegungs-R-Abschnitt, eine konvexe Form bildet, die hin zu der Vorderseite des Fahrzeugs gewandt ist.

9. Das Motorrad gemäß Anspruch 1, bei dem die Mehrzahl der Auspuffrohre (50, 51, 52, 53) jeweils einen rückwärts gebogenen Abschnitt aufweist, der rückwärts gebogen ist, und betrachtet von der Vorderseite des Fahrzeugs (1) von der Mehrzahl der Auspuffrohre, der rückwärts gebogene Abschnitt eines Auspuffrohrs, verbunden mit einer Seite in der Fahrzeugbreitenrichtung der Vorderwand des Motors, höher positioniert ist als der rückwärts gebogene Abschnitt eines Auspuffrohrs, verbunden mit der anderen Seite in der Fahrzeugbreitenrichtung der Vorderwand des Motors (3).

10. Das Motorrad gemäß Anspruch 1, bei dem der Sammelabschnitt auf einem Bodenabschnitt des Motors getragen ist.

11. Das Motorrad gemäß Anspruch 10, das ferner eine Ölwanne (30) aufweist, die an dem Bodenabschnitt des Motors angeordnet ist, wobei der Sammelabschnitt auf der Ölwanne getragen ist.

12. Das Motorrad gemäß Anspruch 1, bei dem ein erster Katalysator in dem Sammelabschnitt angeordnet ist.

13. Das Motorrad gemäß Anspruch 1, bei dem ein zweiter Katalysator in dem Schalldämpfer angeordnet ist.

14. Das Motorrad gemäß Anspruch 1, bei dem:
die Mehrzahl der Auspuffrohre eine erste Auspuffrohrgruppe aufweist, die mit einem Seitenabschnitt der Vorderwand des Motors verbunden ist, und eine zweite Auspuffrohrgruppe, die mit dem anderen Seitenabschnitt verbunden ist;
wobei der Sammelabschnitt einen ersten Sammelabschnitt zum Sammeln der ersten Auspuffrohrgruppe miteinander, einen zweiten Sammelabschnitt zum Sammeln der zweiten Auspuffrohrgruppe miteinander und einen dritten Hauptsammelabschnitt zum Sammeln des ersten Sammelabschnitts und des zweiten Sammelabschnitts miteinander umfasst; und
der Schalldämpfer mit dem dritten Hauptsammelabschnitt verbunden ist.

## Revendications

1. Motocyclette (1) comprenant un châssis de corps (2), un moteur (3) monté sur le châssis de corps, et un système d'échappement connecté au moteur,
dans lequel:
le système d'échappement comporte une pluralité de tuyaux d'échappement (50, 51, 52, 53) connectés à une paroi avant du moteur (3) et s'étendant vers l'arrière, tout en passant au-dessous du moteur, une ou des parties de raccordement (54, 55), où la pluralité de tuyaux d'échappement sont raccordés l'un à l'autre, et un silencieux (57) connecté à la partie de raccordement;
vus depuis l'avant du véhicule, la pluralité de tuyaux d'échappement (50, 51, 52, 53) s'étendent de la paroi avant du moteur vers l'arrière vers un premier côté d'une ligne de centre (c) s'étendant le sur la longueur de la motocyclette (11) dans le sens de la largeur du véhicule et de manière à passer au-dessous du moteur, et sont connectés à la ou aux parties de raccordement (54, 54), et le silencieux (57) est disposé sur un deuxième côté opposé d'une ligne de centre s'étendant sur la longueur de la motocyclette (1) dans le sens de la largeur du véhicule et est connecté à la ou aux parties de raccordement,
**caractérisée par le fait que** le centre de masse de la ou des parties de raccordement (54, 55), lorsqu'elles sont considérées comme étant une seule masse, se situe dudit premier côté de ladite motocyclette (1) par rapport à ladite ligne de centre (c) et que le centre de masse dudit silencieux (57) se situe dudit deuxième côté opposé de la motocyclette par rapport à ladite ligne de centre (c).

2. Motocyclette selon la revendication 1, dans laquelle la pluralité de tuyaux d'échappement s'étendent obliquement vers le bas vers un côté dans le sens de la largeur du véhicule.

3. Motocyclette selon la revendication 1 ou la revendication 2, dans laquelle, vus de l'avant du véhicule, les tuyaux d'échappement présentent, chacune, une partie courbée R ayant une forme convexe orientée vers l'autre côté dans le sens de la largeur du véhicule.

4. Motocyclette selon la revendication 3, dans laquelle, de la pluralité de tuyaux d'échappement, une partie supérieure de la partie courbée R d'un tuyau d'échappement connecté à l'autre partie latérale de la paroi avant du moteur est positionnée plus haute qu'une partie supérieure de la partie courbée R d'un tuyau d'échappement connecté à l'une partie latérale.

5. Motocyclette selon la revendication 3 ou la revendication 4, dans laquelle les centres des sections, prises dans le sens de la largeur du véhicule, de la pluralité de tuyaux d'échappement d'un côté amont de la partie courbée R sont configurés de manière à diverger vers l'avant du véhicule.

6. Motocyclette selon la revendication 5, dans laquelle une courbe connectant les centres des sections, prises dans le sens de la largeur du véhicule, de la pluralité de tuyaux d'échappement du côté amont de la partie courbée R est convexe, orientée vers l'arrière du véhicule.

7. Motocyclette selon la revendication 3, dans laquelle les centres des sections, prises dans le sens de la largeur du véhicule, de la pluralité de tuyaux d'échappement d'un côté aval de la partie courbée R sont configurés de manière à converger vers l'avant du véhicule.

8. Motocyclette selon la revendication 7, dans laquelle une courbe connectant les centres des sections, prises dans le sens de la largeur du véhicule, de la pluralité de tuyaux d'échappement du côté aval de la partie courbée R forme une forme convexe orientée vers l'avant du véhicule.

9. Motocyclette selon la revendication 1, dans laquelle la pluralité de tuyaux d'échappement (50, 51, 52, 53) présentent, chacun, une partie courbée vers l'arrière qui est courbée vers l'arrière et, vu de l'avant du véhicule (1), de la pluralité de tuyaux d'échappement, la partie courbée vers l'arrière d'un tuyau d'échappement connecté à un côté, dans le sens de la largeur du véhicule, de la paroi avant du moteur est positionnée plus haute que la partie courbée vers l'arrière d'un tuyau d'échappement connecté à l'autre côté, dans le sens de la largeur du véhicule, de la paroi avant du moteur (3).

10. Motocyclette selon la revendication 1, dans laquelle la partie de raccordement est supportée sur une partie inférieure du moteur.

11. Motocyclette selon la revendication 10, comprenant par ailleurs un carter à huile (30) disposé dans la partie inférieure du moteur,
dans laquelle la partie de raccordement est supportée sur le carter à huile.

12. Motocyclette selon la revendication 1, dans laquelle un premier catalyseur est disposé dans la partie de raccordement.

13. Motocyclette selon la revendication 1, dans laquelle un deuxième catalyseur est disposé dans le silencieux.

14. Motocyclette selon la revendication 1,
dans laquelle:
la pluralité de tuyaux d'échappement comportent un premier groupe de tuyaux d'échappement connectés à une partie latérale de la paroi avant du moteur, et un deuxième groupe de tuyaux d'échappement connectés à l'autre partie latérale;
la partie de raccordement comporte une première partie de raccordement destinée à raccorder le premier groupe de tuyaux d'échappement entre eux, une deuxième partie de raccordement destinée à raccorder le deuxième groupe de tuyau d'échappement entre eux, et une troisième partie de raccordement principale destinée à raccorder la première partie de raccordement et la deuxième partie de raccordement l'une à l'autre; et
le silencieux est connecté à la troisième partie de raccordement principale.
